# EUROPEAN PATENT APPLICATION

(11) **EP 4 554 031 A1**
(43) Date of publication of application: **14.05.2025**
(21) Application number: 24204892.4
(22) Date of filing: 07.10.2024
(51) Int. Cl.: H02J 3/14, H02J 3/00, H02J 13/00

(54) **METHOD FOR OPTIMAL LOAD SHEDDING FOR PUBLIC SAFETY POWER SHUTOFFS (PSPS) - ADDRESSING PARTIAL LOAD SHEDDING AND LOAD-IMPORTANCE**

(30) Priority: 10.11.2023 US 202318388743
(71) Applicant: Hitachi, Ltd., Tokyo 100-8280 (JP)
(72) Inventor: RAO, Aniruddha Rajendra, Tokyo, 100-8280 (JP); VENKATRAMAN, Chandrasekar, Tokyo, 100-8280 (JP); ELLIS, Robert, Tokyo, 100-8280 (JP); GUPTA, Chetan, Tokyo, 100-8280 (JP)
(74) Representative: Mewburn Ellis LLP

(57) **Abstract**

Systems and methods described herein can involve for a selection of one or more lines in a grid to bring down, executing a load shedding optimizing process configured to determine optimal loads in the grid that can be shed while maintaining grid stability, the determination of optimal loads is based on one or more lines chosen to be brought down, load importance, and identification of loads in the grid that can be partially or completely shed; and executing a load shedding process to shed loads in the grid according to the optimal loads in the grid topology to shed.

## Description

### BACKGROUND

### Field

The present disclosure is generally directed to power systems, and more specifically, to systems and methods for determining optimal load shedding.

### Related Art

In recent times, the western United States has experienced increased, intense, and record-breaking wildfires that have resulted in a devastating loss of life and billions of dollars in property and infrastructure damage. Electric utility infrastructure has historically been responsible for less than 10% of the reported wildfires. However, the fires attributed to power lines have resulted in roughly half of the most destructive fires in the history of California.

During dry and windy seasons, transmission powerlines could potentially start wildfires. In order to protect the public, some power lines are turned off, and power is shut off to a section of users in the electric grid. The procedure for which areas to shut off power is not very efficient. Shutting off power too early causes revenue reduction and public dissatisfaction. However, delaying power shut-offs increases the probability of igniting wildfires.

Related art solutions tend to be in-house solutions based on human/team capabilities or experiences within the organization. There has been some research conducted on load shedding (binary/partial), contingency planning, and load importance, but nothing tackles all of them together.

### SUMMARY

Load shedding is a commonly used technique in Public Safety Power Shutoff (PSPS) to prevent the increase in the spread of a wildfire due to cascading lines and/or other system equipment failures. The example implementations described herein help the incident managers make better decisions in numerous ways as follows.

Preventing cascading failures: Load shedding helps prevent cascading failures that can lead to system-wide blackouts by isolating the affected region and allowing the rest of the system to operate normally.

Cost-effective: Load shedding is a cost-effective way to manage system stability during emergencies, as it avoids the need for expensive upgrades to power transmission and distribution infrastructure.

Prioritization: Load shedding can be designed to prioritize critical loads, such as hospitals, emergency services, and other essential facilities, ensuring that they remain operational during times of stress on the power grid.

Improved system reliability: By preventing the overloading of transmission and distribution infrastructure, load shedding can improve system reliability and reduce the frequency of unplanned outages.

Improved system resilience: Load shedding helps improve the resilience of power systems by allowing them to quickly recover from disturbances and resume normal operation.

The key objective is to reduce the amount of power shut off while a transmission line is taken down due to wildfire ignition risk. The example implementations described herein provide an optimal way for the utilities to choose minimal load shedding once one or more lines have been chosen. The example implementations described herein can be based on a genetic algorithm to not only address optimal power shutoff, but also address partial load shutoff and the importance of the location of the loads.

In example implementations described herein, there is also a novel approach for load regulation for PSPS, which considers partial load shedding as well as load importance, and ensures that the network is stable with minimum load shedding in a cost-effective manner. The multi-step genetic algorithm can provide multiple solutions that can consider load importance and give minimum load shedding.

Aspects of the present disclosure can involve a method, which can involve, for a selection of one or more lines in a grid to bring down, executing a load shedding optimizing process configured to determine optimal loads in the grid that can be shed while maintaining grid stability, the determination of optimal loads based on one or more lines chosen to be brought down, load importance, and identification of loads in the grid that can be partially or completely shed; and executing a load shedding process to shed loads in the grid according to the optimal loads in the grid topology to shed.

Aspects of the present disclosure can involve a computer program, which can involve instructions including, for a selection of one or more lines in a grid to bring down, executing a load shedding optimizing process configured to determine optimal loads in the grid that can be shed while maintaining grid stability, the determination of optimal loads based on one or more lines chosen to be brought down, load importance, and identification of loads in the grid that can be partially or completely shed; and executing a load shedding process to shed loads in the grid according to the optimal loads in the grid topology to shed. The computer program and instructions can be stored on a non-transitory computer readable medium and executed by one or more processors.

Aspects of the present disclosure can involve a system, which can involve, for a selection of one or more lines in a grid to bring down, means for executing a load shedding optimizing process configured to determine optimal loads in the grid that can be shed while maintaining grid stability, the determination of optimal loads based on one or more lines chosen to be brought down, load importance, and identification of loads in the grid that can be partially or completely shed; and means for executing a load shedding process to shed loads in the grid according to the optimal loads in the grid topology to shed.

Aspects of the present disclosure can involve an apparatus, which can involve a processor, configured to, for a selection of one or more lines in a grid to bring down, execute a load shedding optimizing process configured to determine optimal loads in the grid that can be shed while maintaining grid stability, the determination of optimal loads based on one or more lines chosen to be brought down, load importance, and identification of loads in the grid that can be partially or completely shed; and execute a load shedding process to shed loads in the grid according to the optimal loads in the grid topology to shed.

### BRIEF DESCRIPTION OF DRAWINGS

FIG. 1 illustrates an example flow diagram for the optimal load shedding approach for PSPS, in accordance with an example implementation.
FIG. 2 illustrates an example load shedding solution, in accordance with an example implementation.
FIG. 3A illustrates an example flow of the multi-step approach 103 through using genetic algorithms, in accordance with an example implementation.
FIG. 3B illustrates an example of load importance information, in accordance with an example implementation.
FIG. 3C illustrates an example comparison of partial load shedding versus partial load shedding with importance using a genetic algorithm, in accordance with an example implementation.
FIG. 3D illustrates an example of the convergence of the load shedding, in accordance with an example implementation.
FIGS. 4 and 5 illustrate an example user interface for removing a line and simulating load shed, in accordance with an example implementation.
FIG. 6 illustrates an example computing environment with an example computer device suitable for use in some example implementations.

### DETAILED DESCRIPTION

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of the ordinary skills in the art of practicing implementations of the present application. Selection can be conducted by a user through a user interface or other input means, or can be implemented through a desired algorithm. Example implementations as described herein can be utilized either singularly or in combination, and the functionality of the example implementations can be implemented in any manner in accordance with the desired implementation.

Example implementations described herein involve a novel multi-step optimal load shedding approach for PSPS. The proposed system has the following components.

Data collection and data storage units: This component collects network data with the help of a power system tool.

Data-driven optimization unit: This component uses the multi-step genetic algorithm to find the best load shedding options.

Model deploying units: This component deploys the solution selected by the incident manager.

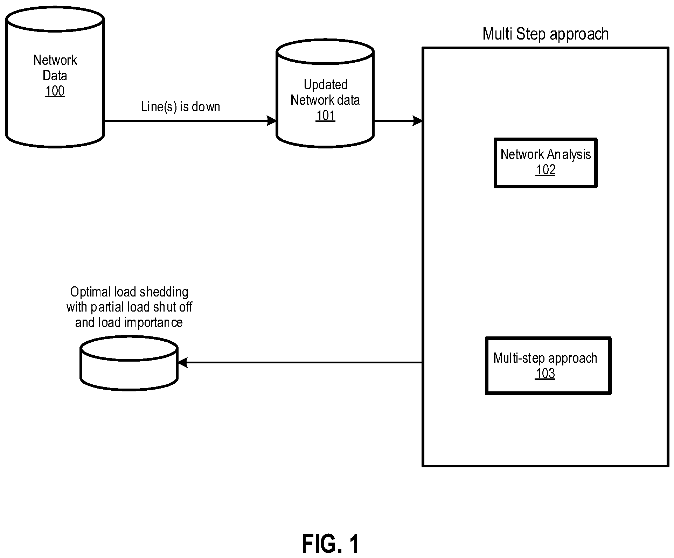

FIG. 1 illustrates an example flow diagram for the optimal load shedding approach for PSPS, in accordance with an example implementation. Network data 100 from one or more lines of a grid is pre-processed to form updated network data 101, which is then fed into a multi-step approach. The multi-step approach can involve network analysis 102 and a multi-step approach 103. The multi-step approach 103 can involve multiple steps involving a genetic algorithm. The updated network data 101 involves preprocessing to ensure that the network data 100 to be used in the calculations described herein is correct, clean, and updated for the downed lines.

Network analysis 102 checks if the network fails given a line(s) is down and if load optimization is needed. In the multi-step approach 103, the genetic algorithm considers the important loads that cannot be shut down to find the optimal load-shedding solution, once the network fails based on the determination from network analysis 102. The genetic algorithm is configured to search for an optimal load-shedding solution using all the loads while considering their importance. In the interest of public safety, since electric grids are large and multiple options exist. The strategy is to keep the most optimal load sheet because by shedding load. The multi-step approach 103 can iterate the genetic algorithm across multiple steps until a load shedding solution is determined.

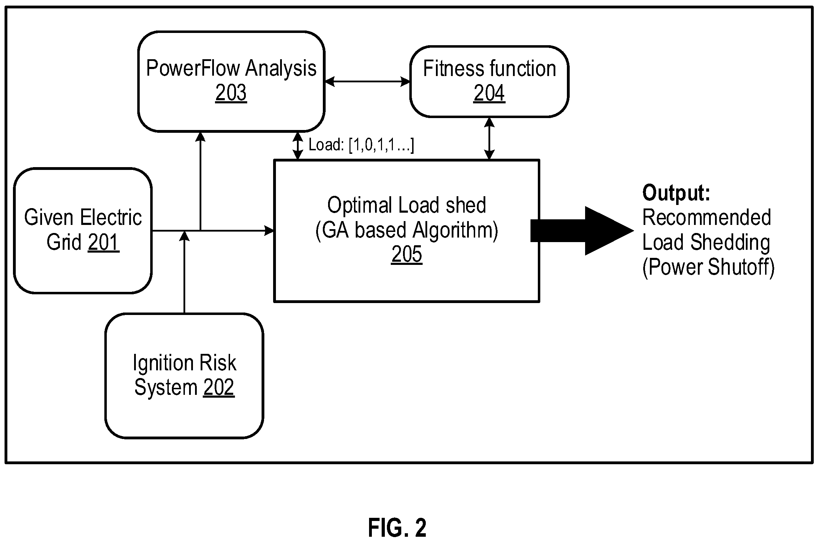

FIG. 2 illustrates an example load shedding solution, in accordance with an example implementation. As illustrated in FIG. 2, there can be a given electric grid 201 that is processed for ignition system risk 202 for provision into the optimal load shed algorithm 205. Other analysis that can be conducted include power flow analysis 203, which is put through a fitness function 204 for use in the optimal load shed algorithm 205. Based on the output of the optimal load shed algorithm 205, recommended load shedding can thereby be provided.

Updated network data 101 can involve the selection of line(s) to be shut from which a power system/analysis tool can be executed to get the information on the network. A line can be down due to multiple reasons (e.g., fire, repair, other disasters).

In network analysis 102, the example implementations ensure that the network is secured after the line(s) is down. This is checked by making sure that none of the lines in the network have a line load of more than a certain threshold (e.g., 100%) and that the voltage at each bus is within a certain interval (e.g., 0.95 to 1.05). These values can be changed according to the problem at hand and as in accordance with the desired implementation.

For the genetic algorithm (GA) 103, note that a genetic algorithm is a heuristic search and optimization technique based on the principles of natural selection and genetics. It is a population-based algorithm that starts with an initial population of candidate solutions and iteratively evolves the population towards better solutions using genetic operators such as selection, crossover, and mutation. The example implementations described herein are directed to load shedding, and hence the example implementations try to optimize the load values using GA.

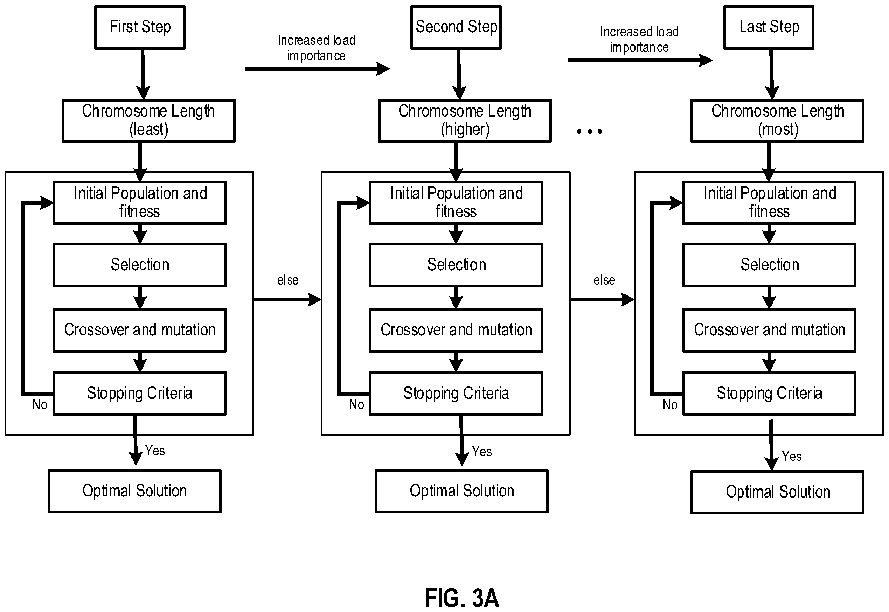

FIG. 3A illustrates an example flow of the multi-step approach 103 through using genetic algorithms, in accordance with an example implementation.

Example implementations described herein utilize the genetic algorithm and variants to conduct optimal load shedding, which can involve not only completely shutting off a load, but also partial load shedding as well. That is, instead of shutting off 100% of the load, some percentage of the load can be maintained so that at least some power can be distributed in the related area.

The flow of the genetic algorithm at each step can be as follows.
(a) Initial population and fitness: Create an initial population (a few solution candidates for the loads in the network) of candidate solutions randomly or using some heuristics. The genes are the loads in the GA. Each solution is considered to be a chromosome. Evaluate each candidate solution in the population using an fitness function (the value to be optimized based on a secure network and overall load shedding) that measures the quality of the solution. The fitness function can be defined in accordance with the desired implementation. For example, the fitness function can involve stability parameters (e.g., voltage or current across the grid topology being within a specified tolerance), or otherwise, in accordance with the desired implementation. The chromosomes in the population are then ordered from the best fit to the least good fit, thereby providing some optimum solutions available.
(b) Selection: Select the fittest individuals from the population to form a new population. This step uses a selection method that favors better individuals (e.g., ones that meet the threshold of the fitness function) and discards weaker ones.
(c) Crossover and mutation: Create new candidate solutions by recombining the genetic material (i.e., the parameters or features) of two selected individuals from the population. Such selection can be done randomly, or through other desired implementations. The crossover operation generates offspring with a combination of the characteristics of both parents. Then, mutation is introduced by utilizing random changes in the genetic material of the offspring to introduce new variations in the population. This operation helps to explore new regions of the search space and prevent the algorithm from being stuck in local optima. The mutation can be conducted via mutation factor where for one of the chromosomes, genes are randomly flipped or modified with a random probability.
(d) Stopping criteria: Stop the algorithm when a stopping criterion is met (Yes), such as a maximum number of generations or for when a satisfactory solution is found. Otherwise (No) the flow returns to initializing the population and fitness again.

The key benefits of using a genetic algorithm are its ability to search the global optima, handle non-linear and non-differentiable problems, and its robustness against noise and outliers. However, the genetic algorithm also has some limitations such as the slow convergence rate, the need for a large number of evaluations, and the difficulty in finding the right parameter settings.

Since the desire is not just load reduction, but also partial load reduction along with load importance, the genetic algorithm is used in a multi-step approach as illustrated in FIG. 3A. Multi-step genetic algorithm is a variant of the genetic algorithm, which is an optimization algorithm inspired by natural selection and genetics. In a multi-step genetic algorithm, the algorithm is used to optimize a set of decision variables over multiple time steps or stages. The optimization problem is solved in sequential steps, and each step if reached uses a genetic algorithm. We start with the set of least important loads for optimization and only move to the next step if no solution is found in the current step. In the next step, more loads are considered for optimization, and the process is repeated until a solution is found or until the final step is reached in which all the loads for optimal load shedding are considered. As shown in FIG. 3A, the chromosome length is increased with each step of the multi-step approach, indicating that there is increased load importance. It is not necessary to reach the final step if we find an optimal solution in one of the previous steps with a subset of the loads.

In the multi-step approach 103, the load importance is taken into consideration. All important loads are set to a value of 1, and the multi-step approach 103 attempts to find a solution using the remaining loads. If no such solution is found, then in an example implementation, more loads are considered in the next step according to their importance to find a solution and the process continues until the last step is reached in which all loads are considered to find a solution.

More steps can also be utilized to run the analysis faster, in accordance with the desired implementation. Because of the genetic algorithm, the loads can be defined in a very flexible manner, (e.g., from 0 to 1) and some loads can be fixed at a particular value or range in accordance with the desired implementation.

The main advantage of a multi-step genetic algorithm is that it can handle complex optimization problems that are difficult or impossible to solve using related art optimization methods. However, some care is needed in the design and tuning to ensure that it converges to a good solution in a reasonable amount of time. Additionally, the algorithm can be computationally expensive, especially when the number of time steps or stages is large. In example implementations, the stages can be different load importance levels. Thus, when no feasible solutions are available, additional possible loads from the loads available based on the load importance can be considered until a solution can be provided.

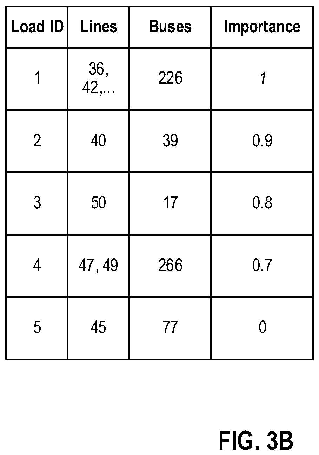

FIG. 3B illustrates an example of load importance information, in accordance with an example implementation. Each load can be associated with a load importance indicating, for example, the minimum percentage of load that must be provided. For example, some loads may be providing electricity to an area in which there are hospitals, police stations, fire stations, and so on. As some loads may have more importance due to it supplying power to key entities, there is a need to ensure that other loads are considered for shedding at first before such loads are considered. The information of FIG. 3B can be used for the genetic algorithm as illustrated in FIG. 3A.

As illustrated in FIG. 3B, example information can include Load ID, Lines, Buses, and importance level. Load ID indicates the ID of the load. Lines can indicate any lines that are connected to the load associated with the Load ID. Buses can also indicate any buses that are connected to the load. Importance can indicate the importance level of the load, and thereby indicate an order of the load priority for determining which load to shed. For example, load 5 has the lowest importance, and is capable of being completely shed, if desired. Conversely, load 4 has a minimum load importance of 70%, whereas load 1 has the highest importance. As illustrated in FIG. 3B, loads that can be completely shed can be set to zero, and loads that can be partially shed are set at some non-zero value depending on importance.

In addition, power flow analysis 203 can also be considered by the above algorithm. In such an example implementation, power flow analysis 203 is configured to analyze the grid and determine steady state values for the lines and the loads in the grid topology based on the one or more lines selected to be brought down. Power flow analysis 203 implementations can be conducted through any known solution in the art, such as Panda Power.

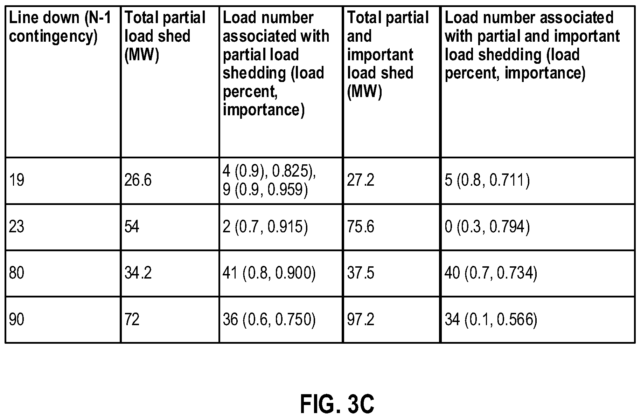

FIG. 3C illustrates an example comparison of partial load shedding versus partial load shedding with importance using a genetic algorithm, in accordance with an example implementation. In the example of FIG. 3C, a random load importance is assigned to loads using beta distribution (α=5 and β=1). In practice, the information is known by the incident managers. In the proposed multi-step genetic algorithm approach, in the first step, non-critical loads (load importance < 0.8) are considered for shedding. If an optimal load shedding solution is not found in the first step, then all the loads are considered for load shedding in the second step. FIG. #C illustrates how partial optimal load shedding performs with and without load importance. For example, when line 23 is down and load importance is not considered, then the solution is to set load 2 at 70% capacity resulting in 54 MW of load shedding. However, the load importance of load 2 is 0.915, so when the load importance is taken into consideration, the solution is to set load 0 at 30% capacity resulting in 75.6 MW load shedding as load 0 has a lower importance (0.794) compared to load 2. FIG. 3C illustrates that the example implementations are successful in ensuring no important load is shed if an alternate solution exists. Further, the example implementations can achieve the load shedding with a marginal increase in load shedding when load importance and partial load shedding is taken into consideration.

Through the example implementations described herein, various benefits can be obtained as follows. For example, near optimal load shedding recommendation for PSPS can be computed within a reasonable time. Any line(s) can be chosen, and the solution provides load shedding recommendations. Through the example implementations described herein, it is also possible to choose partial load shedding to reduce the overall load shedding in the network.

Through the example implementations described herein, the importance of the load can be assigned to each load; thus, the overall solution can consider the criticality of the load such as hospital and infrastructure. Further, the example implementations provide a tool for rapid decision making knowing all aspects are considered for the incident commander.

The example implementations described herein can be useful for any situation to address the challenges relating to optimal load shedding during PSPS. Examples of these are disruptions in the network due to wildfires, equipment failures, natural disasters to processes, and so on.

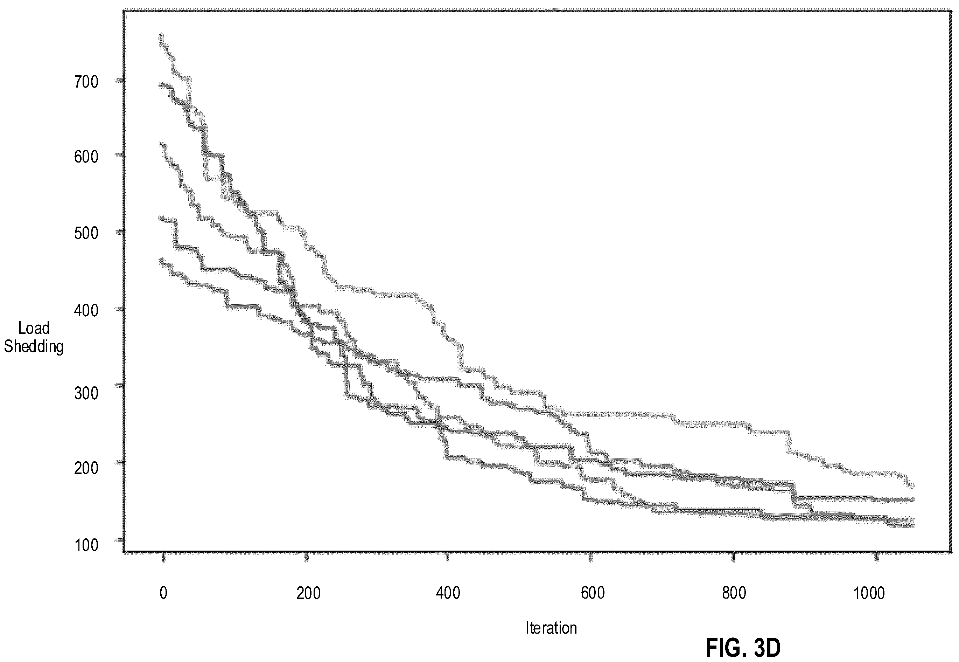

FIG. 3D illustrates an example of the convergence of the load shedding, in accordance with an example implementation. The genetic algorithm runs until the specified number of iterations is reached or a stopping criterion is met to make the network safe and the total load shed is minimized. As illustrated in FIG. 3D, the gains in load shedding after some iterations lead to a minimal increase in performance, and independent runs (denoted using different lines) give a similar amount of load shedding, which can be beneficial to the incident manager in making decisions of which load(s) to shed and by how much. The independent runs give different solutions due to the stochastic nature of the genetic algorithm. However, this set of good solutions can be used to select the best solution according to specific criteria. The multiple solutions provided by the genetic algorithm can also be useful for exploring the solution space and identifying trade-offs between different objectives. Domain knowledge will lead to selecting a local optimal solution rather than a global optimal solution due to multiple reasons. Generally, the example implementations can provide similar load reduction and stabilizes close to the optimal value.

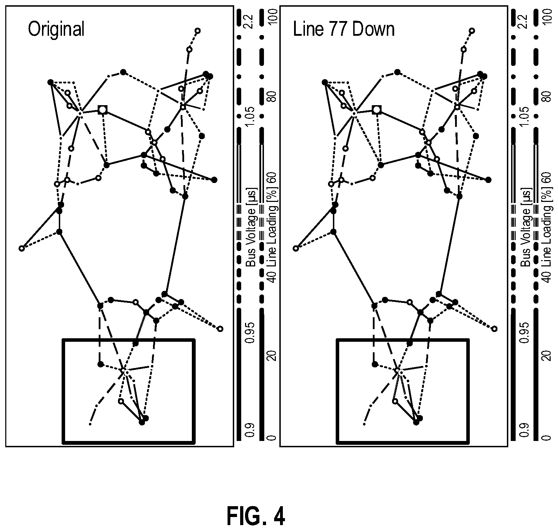

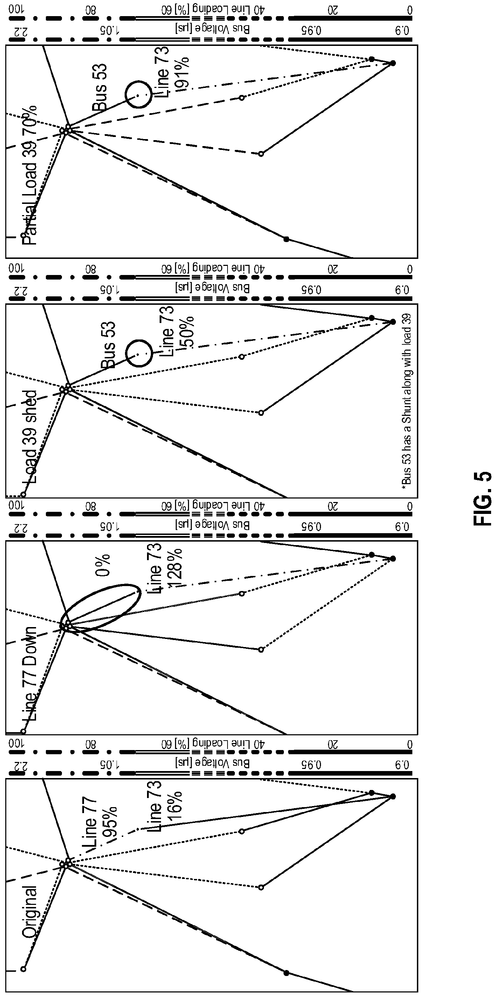

FIGS. 4 and 5 illustrate an example user interface for removing a line and simulating a load shed, in accordance with an example implementation. In the example of FIG. 4, through the interface, a line is selected (Line 77) to be taken down for simulation from the original grid layout. FIG. 5 illustrates the output of the simulation. As illustrated in FIG. 5, when Line 77 is taken down, the load on Line 73 increases to 128%, which is not permissible. Through the example implementations described herein, load 39 is thereby selected to be shed with related Bus 53 selected for having a shunt along with Load 39, which reduces the load on Line 73 to 50% and can therefore be subject to a load shedding process. In another simulation, the partial shedding of Load 39 to 70% keeps Line 73 at a load of 91%, which can also be feasible and selected depending on the specified load importance of Line 73.

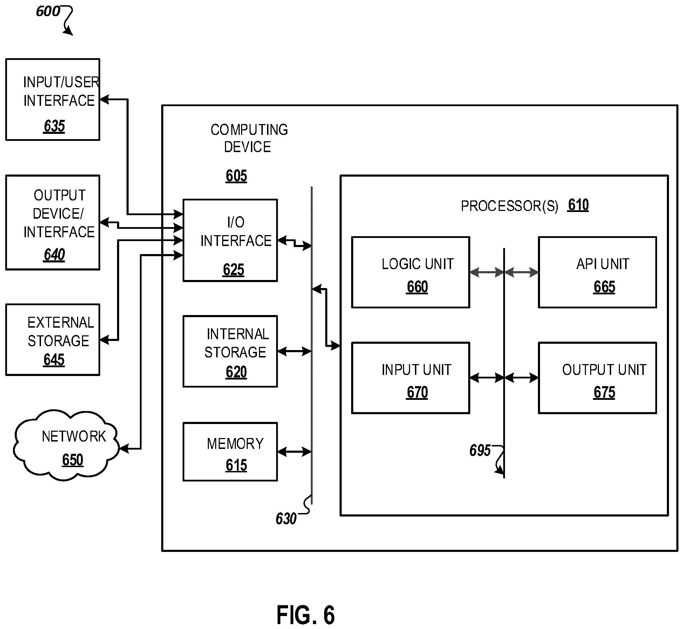

FIG. 6 illustrates an example computing environment with an example computer device suitable for use in some example implementations, such as a management server or management computer configured to manage a power grid and execute load shedding processes on the power grid. Computer device 605 in computing environment 600 can include one or more processing units, cores, or processors 610, memory 615 (e.g., RAM, ROM, and/or the like), internal storage 620 (e.g., magnetic, optical, solid-state storage, and/or organic), and/or IO interface 625, any of which can be coupled on a communication mechanism or bus 630 for communicating information or embedded in the computer device 605. IO interface 625 is also configured to receive images from cameras or provide images to projectors or displays, depending on the desired implementation.

Computer device 605 can be communicatively coupled to input/user interface 635 and output device/interface 640. Either one or both of the input/user interface 635 and output device/interface 640 can be a wired or wireless interface and can be detachable. Input/user interface 635 may include any device, component, sensor, or interface, physical or virtual, that can be used to provide input (e.g., buttons, touch-screen interface, keyboard, a pointing/cursor control, microphone, camera, braille, motion sensor, accelerometer, optical reader, and/or the like). Output device/interface 640 may include a display, television, monitor, printer, speaker, braille, or the like. In some example implementations, input/user interface 635 and output device/interface 640 can be embedded with or physically coupled to the computer device 605. In other example implementations, other computer devices may function as or provide the functions of input/user interface 635 and output device/interface 640 for a computer device 605.

Examples of computer device 605 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 605 can be communicatively coupled (e.g., via IO interface 625) to external storage 645 and network 650 for communicating with any number of networked components, devices, and systems, including one or more computer devices of the same or different configuration. Computer device 605 or any connected computer device can be functioning as, providing services of, or referred to as a server, client, thin server, general machine, special-purpose machine, or another label.

IO interface 625 can include but is not limited to, wired and/or wireless interfaces using any communication or IO protocols or standards (e.g., Ethernet, 802.1 1x, Universal System Bus, WiMAX, modem, a cellular network protocol, and the like) for communicating information to and/or from at least all the connected components, devices, and network in computing environment 600. Network 650 can be any network or combination of networks (e.g., the Internet, local area network, wide area network, a telephonic network, a cellular network, satellite network, and the like).

Computer device 605 can use and/or communicate using computer-usable or computer readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid-state media (e.g., RAM, ROM, flash memory, solid-state storage), and other non-volatile storage or memory.

Computer device 605 can be used to implement techniques, methods, applications, processes, or computer-executable instructions in some example computing environments. Computer-executable instructions can be retrieved from transitory media and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 610 can execute under any operating system (OS) (not shown), in a native or virtual environment. One or more applications can be deployed that include logic unit 660, application programming interface (API) unit 665, input unit 670, output unit 675, and inter-unit communication mechanism 695 for the different units to communicate with each other, with the OS, and with other applications (not shown). The described units and elements can be varied in design, function, configuration, or implementation and are not limited to the descriptions provided. Processor(s) 610 can be in the form of hardware processors such as central processing units (CPUs) or in a combination of hardware and software units.

In some example implementations, when information or an execution instruction is received by API unit 665, it may be communicated to one or more other units (e.g., logic unit 660, input unit 670, output unit 675). In some instances, logic unit 660 may be configured to control the information flow among the units and direct the services provided by API unit 665, the input unit 670, the output unit 675, in some example implementations described above. For example, the flow of one or more processes or implementations may be controlled by logic unit 660 alone or in conjunction with API unit 665. The input unit 670 may be configured to obtain input for the calculations described in the example implementations, and the output unit 675 may be configured to provide an output based on the calculations described in example implementations.

Processor(s) 610 can be configured to execute a method or computer instructions involving, for a selection of one or more lines in a grid to bring down as illustrated in FIG. 4 and 5, executing a load shedding optimizing process configured to determine optimal loads in the grid that can be shed while maintaining grid stability, the determination of optimal loads is based on one or more lines chosen to be brought down, load importance, and identification of loads in the grid that can be partially or completely shed as illustrated in FIGS. 1 to 3B; and executing a load shedding process to shed loads in the grid according to the optimal loads in the grid topology to shed. The load shedding process can be any management function as known in the art to control a power grid for load shedding. Through the example implementation described herein, the load shedding optimizing process can determine an optimal load for the load shedding process in a manner that is faster than the related art solutions.

Depending on the desired implementation, the stability parameters can be user defined margins for the grid topology with respect to to voltage, current, and other parameters in the grid as described with respect to FIG. 3A. Such stability parameters can be defined to avoid cascading failures in accordance with the desired implementation.

Processor(s) 610 can be configured to execute the method or instructions as described above, wherein the load shedding optimizing process involves executing an iterative algorithm based on genetic algorithm that intakes loads available for shedding determined from the load importance and the identification of the loads in the grid that can be partially or completely shed as genes, a set of loads as a chromosome, and which is configured to iteratively simulate the grid based on the selected one or more lines to bring down and provide load values as the optimal solution as illustrated in FIG. 3A and 3B.

Processor(s) 610 can be configured to execute the method or instructions as described above, wherein the iterative algorithm is configured, for no feasible solutions being available, to iteratively consider additional possible loads from the loads available based on the load importance until a solution can be provided.

Processor(s) 610 can be configured to execute the method or instructions as described above, wherein the load shedding optimization process is configured to use power flow analysis that analyzes the grid and determines steady state values for lines and the loads based on the one or more lines chosen to be brought down, as described with respect to FIGS. 2, 3A, and 3B.

Depending on the desired implementation, the load importance can be indicative of an order of a load priority for determining which of the loads to shed.

Depending on the desired implementation, the loads that can be partially shed are set to a non-zero value, wherein the loads that can be completely shed can be set to zero.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer readable storage medium or a computer readable signal medium. A computer readable storage medium may involve tangible mediums such as, but not limited to, optical disks, magnetic disks, read-only memories, random access memories, solid-state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the teachings of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general-purpose computer, based on instructions stored on a computer readable medium. If desired, the instructions can be stored in the medium in a compressed and/or encrypted format.

Moreover, other implementations of the present application will be apparent to those skilled in the art from consideration of the specification and practice of the teachings of the present application. Various aspects and/or components of the described example implementations may be used singly or in any combination. It is intended that the specification and example implementations be considered as examples only, with the true scope and spirit of the present application being indicated by the following claims.

## Claims

1. A method, comprising:
for a selection of one or more lines in a grid to bring down in a grid topology:
executing a load shedding optimizing process configured to determine optimal loads in the grid that can be shed while maintaining grid stability according to stability parameters, the determination of optimal loads is based on one or more lines chosen to be brought down, load importance, and identification of loads in the grid that can be partially or completely shed; and
executing a load shedding process to shed loads in the grid according to the optimal loads in the grid topology to shed.

2. The method of claim 1, wherein the stability parameters are user defined margins for the grid topology with respect to voltage, current, and other parameters in the grid.

3. The method of claim 1, wherein the load shedding optimizing process comprises:
executing an iterative algorithm based on genetic algorithm that intakes loads available for shedding determined from the load importance and the identification of the loads in the grid that can be partially or completely shed as genes, a set of loads as a chromosome, and which is configured to iteratively simulate the grid based on the selected one or more lines to bring down and provide load values as the optimal loads.

4. The method of claim 3, wherein the iterative algorithm is configured, for no feasible solutions being available, to iteratively consider additional possible loads from the loads available based on the load importance until a solution can be provided.

5. The method of claim 1, wherein the load shedding optimization process is configured to use power flow analysis that analyzes the grid and determines steady state values for lines and the loads based on the one or more lines chosen to be brought down.

6. The method of claim 1, wherein the load importance is indicative of an order of a load priority for determining which of the loads to shed.

7. The method of claim 1, wherein the loads that can be partially shed are set to a non-zero value, wherein the loads that can be completely shed are set to zero.

8. A non-transitory computer readable medium, storing instructions for executing a process,
the instructions comprising:
for a selection of one or more lines in a grid to bring down in a grid topology:
executing a load shedding optimizing process configured to determine optimal loads in the grid that can be shed while maintaining grid stability according to stability parameters, the determination of optimal loads is based on one or more lines chosen to be brought down, load importance, and identification of loads in the grid that can be partially or completely shed; and
executing a load shedding process to shed loads in the grid according to the optimal loads in the grid topology to shed.

9. The non-transitory computer readable medium of claim 8, wherein the stability parameters are user defined margins for the grid topology with respect to voltage, current, and other parameters in the grid.

10. The non-transitory computer readable medium of claim 8, wherein the load shedding optimizing process comprises:
executing an iterative algorithm based on genetic algorithm that intakes loads available for shedding determined from the load importance and the identification of the loads in the grid that can be partially or completely shed as genes, a set of loads as a chromosome, and which is configured to iteratively simulate the grid based on the selected one or more lines to bring down and provide load values as the optimal loads.

11. The non-transitory computer readable medium of claim 10, wherein the iterative algorithm is configured, for no feasible solutions being available, to iteratively consider additional possible loads from the loads available based on the load importance until a solution can be provided.

12. The non-transitory computer readable medium of claim 8, wherein the load shedding optimization process is configured to use power flow analysis that analyzes the grid and determines steady state values for lines and the loads based on the one or more lines chosen to be brought down.

13. The non-transitory computer readable medium of claim 8, wherein the load importance is indicative of an order of a load priority for determining which of the loads to shed.

14. The non-transitory computer readable medium of claim 8, wherein the loads that can be partially shed are set to a non-zero value, wherein the loads that can be completely shed are set to zero.

15. An apparatus, comprising:
a processor, configured to:
for a selection of one or more lines in a grid to bring down in the grid topology:
execute a load shedding optimizing process configured to determine optimal loads in the grid that can be shed while maintaining grid stability according to stability parameters, the determination of optimal loads is based on one or more lines chosen to be brought down, load importance, and identification of loads in the grid that can be partially or completely shed; and
execute a load shedding process to shed loads in the grid according to the optimal loads in the grid topology to shed.
